# EUROPÄISCHE PATENTSCHRIFT

(11) **EP 1 614 670 B1**
(45) Veröffentlichungstag und Bekanntmachung des Hinweises auf die Patenterteilung: **20.06.2012**
(21) Anmeldenummer: 05014634.9
(22) Anmeldetag: 06.07.2005
(51) Int. Cl.: C04B 28/06

(54) **Verwendung einer Bindemittelmischung zur Formulierung von zementären Mörtelsystemen**
Use of a binder mixture to formulate a cementitious mortar system
Utilisation d'un mélange de liants pour formuler un système de mortier cimentaire

(30) Priorität: 06.07.2004 DE 102004032529
(43) Veröffentlichungstag der Anmeldung: 11.01.2006
(73) Patentinhaber: PCI Augsburg GmbH, 86159 Augsburg (DE)
(72) Erfinder: Baier, Herbert Dipl. Min., 86199 Augsburg (DE); Holland, Uwe, Dr., 8965 Berikon (CH); Degenkolb, Mathias, Dr., 67434 Neustadt (DE); Kozel, Thomas, 86343 Königsbrunn (DE)
(74) Vertreter: HOFFMANN EITLE

(56) Entgegenhaltungen:
- EP-A- 0 650 942
- EP-A- 1 072 566
- US-A- 5 362 320
- HEWLETT, P.C. (ED): "Chemistry of Cement and Concrete" 1998, BUTTERWORTH-HEINEMANN , OXFORD , XP002477880 * Seite 717; Tabelle 13.1 *

## Beschreibung

Die vorliegende Erfindung betrifft die Verwendung einer Bindemittelmischung auf Basis von Portlandzementklinkermehl und Calciumaluminatzement (Tonerdezement) zur Formulierung von zementären Mörtelsystemen.

Hydraulische Bindemittelsysteme auf Basis von Portlandzement gegebenenfalls in Kombination mit Calciumaluminatzement weisen einen Erstarrungs-, Erhärtungs- und Hydratationsverlauf auf, der üblicherweise durch die nachträgliche Sulfatierung des Portlandzementklinkermehls gesteuert wird.

Der Zusatz von verschiedenen Sulfatträgern (im Wesentlichen Gips/Dihydrat, Halbhydrat und Anhydrit) im Mahlprozess gewährleistet bei den Portlandzementen eine ausreichend lange Verarbeitbarkeit, regelt das Erstarrungsverhalten und den Erhärtungsverlauf durch die sulfatbedingte Ettringitbildung. Geringste Schwankungen im Sulfatträger solcher Bindemittelsysteme die Seitens der Zementhersteller technisch bedingt sind, sowie in den daraus hergestellten Baustoffmischungen führen zu unerwünschten Änderungen der Eigenschaften und zu einem erheblichen Mehraufwand durch Eingangskontrollen, Nachformulieren, Rezeptureinstellungen sowie Schadens- und Reklamationsfällen, was sich insbesondere bei der Herstellung und bei der Anwendung bauchemischer Formulierungen sehr stark auswirkt.

Verschiedene Ansätze zum Einsatz unsulfatierter Portlandzemente in Bindemittel und Baustoffmischungen wurden entsprechend dem Stand der Technik bereits beschrieben, insbesondere auf dem Gebiet der Schnellzemente und Spritzzemente.

So wird beispielsweise gemäß der DE 101 41 864 A1 eine Schnellzementbindemittel-Mischung für einen schnellhärtenden Beton (insbesondere für Verkehrsflächen) beschrieben, die eine steuerbare Verarbeitungszeit und eine nach Ende der Verarbeitungszeit rasch ansteigende Festigkeit aufweist. Erfindungswesentlich ist hierbei, dass diese Bindemittelmischung aus einem sulfatfreien Portlandzementklinker-Feinstmehl sowie einem Erstarrungsregler, wie z. B. Glukonsäure, besteht. Nachteilig hierbei ist jedoch wiederum die Tatsache, dass die Reaktivität der Portlandzementklinker mit speziellen Zusatzmitteln, die als Ersatz für den Sulfatträger fungieren, geregelt beziehungsweise gesteuert werden müssen.

EP1072566A1 zeigt eine schnellhärtende, hydraulische Bindemittelmischung die als Bindemittelbestandteil 25 bis 99,7 Massenprozent eines sulfatträgerfreien Portlandzementklinkermehls, 0 bis 30 Massenprozent eines Tonerdezements, 0 bis 30 Massenprozent an puzzolanischen und/oder latenthydraulischen Stoffen wie Hochofenschlackenmehl oder sulfatfreie Flugasche sowie Lignisulfonate und Alkalicarbonate als Erstarrungs- und Erhärtungsbeschleuniger aufweist.

Der vorliegenden Erfindung lag daher die Aufgabe zugrunde, ein hydraulisches Bindemittelsystem zur Formulierung von zementären Mörtelsystemen zur Verfügung zu stellen, welches keines Zusatzes eines Sulfatträgers oder eines abbindesteuernden Zusatzmittels bedarf und gleichzeitig eine ausreichende Verarbeitbarkeit und stabile Festigkeitsentwicklung gewährleistet.

Diese Aufgabe wurde erfindungsgemäß dadurch gelöst, dass die Bindemittelmischung
a) 35 bis 60 Gew.-% Portlandzementklinkermehl ohne Erstarrungsregler in Form von Sulfatträgern
b) 35 bis 60 Gew.-% Calciumaluminatzement sowie
c) 5 bis 20 Gew.-% Zusatzstoffe, ausgewählt aus der Gruppe Puzzolane und/oder latenthydraulische Stoffe,
enthält.

Es hat sich hierbei überraschenderweise gezeigt, dass die erfindungsgemäß eingesetzte Bindemittelmischung zementären Mörtelsystemen ausgezeichnete Eigenschaften im Hinblick auf gute Verarbeitbarkeit und lange Verarbeitungszeiten verleiht. Außerdem weisen die entsprechend ausgehärteten Mörtelsysteme eine hohe Beständigkeit gegen den Angriff von kalkaggressiver Kohlensäure und biogener Schwefelsäure sowie keine Ausblühneigung auf, was ebenfalls nicht vorhersehbar war.

Die erfindungsgemäß eingesetzte Bindemittelmischung besteht aus mindestens drei Komponenten.

Die erste Komponente a) besteht aus 35 bis 60 Gew.-%, Portlandzementklinkermehl. Erfindungswesentlich ist hierbei, dass dem Portlandzementklinkermehl kein Erstarrungsregler in Form von Sulfatträgern zugesetzt wurde.

Die zweite Komponente b) besteht aus 35 bis 60 Gew.-% Calciumaluminatzement (Tonerdezement), wobei der Calciumaluminatzement vorzugsweise aus 30 bis 85 Gew.-% Al₂O₃, 15 bis 50 Gew.-% CaO, 0 bis 20 Gew.-% SiO₂ sowie 0 bis 25 Gew.-% Fe₂O₃+FeO besteht. Die Teilchengröße des eingesetzten Calciumaluminatzements ist weitgehend unkritisch, doch hat es sich als besonders vorteilhaft erwiesen, Calciumaluminatzement mit einem mittleren Durchmesser (d₅₀-Wert) von 0,1 bis 250 µm, insbesondere 0,5 bis 25 µm, zu verwenden.

Als dritte Komponente c) enthält die erfindungsgemäß eingesetzte Bindemittelmischung 5 bis 20 Gew.-%, Zusatzstoffe, ausgewählt aus der Gruppe Puzzolane und/oder latenthydraulische Stoffe. Vorzugsweise sind diese Puzzolane und/oder latent hydraulische Stoffe ausgewählt aus Mikrosilica, Nanosilica, Metakaolin, Flugaschen, Reisschalenaschen, sulfatfreien Schlacken (Hüttensande), amorphem gefälltem Silica, synthetischen Calciumsilikathydraten, Trassmehl, Schiefermehl, wässrigen kolloiden SiO₂-Dispersionen Zeolithen, Kieselgur, Tonmineralien sowie aktivierten Tonmineralien.

Es ist im Rahmen der vorliegenden Erfindung auch möglich, dass die erfindungsgemäß eingesetzte Bindemittelmischung noch 0,1 bis 5 Gew.-% Additive aus der Gruppe der Fließmittel, Beschleuniger, Kunststoffdispersionen, Stärkeether, Celluloseether, Wasserrückhaltemittel, Farbpigmente, Luftporenbildner, Entschäumer, Hydrophobierungsmittel, sulfatfreie Quell- oder Treibmittel (z. B. Al-Pulver) und Stabilisierer enthält.

Die erfindungsgemäß vorgeschlagene Bindemittelmischung eignet sich hervorragend zur Herstellung von hydraulisch abbindenden Mörteln, wie z. B. Fugenmörtel, Fliesenkleber, Reparaturmörtel, Vergussmörtel, Putze, Spachtelmassen und zementäre Abdichtungen, wobei diese zementären Mörtelsysteme sowohl in ein- oder zweikomponentiger Form zum Einsatz kommen können.

Die Vorteile der erfindungsgemäß eingesetzten Bindemittelmischung lassen sich folgendermaßen zusammenfassen:
- Keine Problematik mit Sulfatträgerschwankungen, da kein Sulfatträger vorhanden
- Günstiger Hydratationsverlauf auch unter 5 °C
- Höhere Beständigkeiten, z. B. gegen kalkaggressive Kohlensäure und biogener Schwefelsäure
- Reduzierte Ausblühneigung

Die nachfolgenden Beispiele sollen die Erfindung näher veranschaulichen.

### Beispiele

### Beispiel 1: Fugenmörtel

| | |
|---|---|
| 55 Gew.-% | Quarzsand (0,1 - 0,7 mm) der Firma Haida |
| 20 Gew.-% | Portlandzementklinkermehl (sulfatträgerfrei) |
| 20 Gew:-% | Calciumaluminatzement mit niedrigem Eisengehalt (<0,4 Gew.-%) |
| 2 Gew.-% | Mikrosilika Fesil LM der Fa. Fesil |
| 1 Gew.-% | Metakaolin |
| 2 Gew.-% | Weißpigment (TiO₂) |
| Anmachwasser: | 165 g/kg Pulver |

### Vergleichsbeispiel 2: Fugenmörtel

| | |
|---|---|
| 60 Gew.-% | Quarzsand HS4 |
| 35 Gew.-% | Portlandzement CEM1 42,5R |
| 5 Gew.-% | Kalksteinmehl |
| Anmachwasser: | 200 g/kg Pulver |

**Tabelle 1: Ergebnisse zur Beständigkeit gegenüber dem Angriff von kalkaggressiver Kohlensäure und biogener H₂SO₄.**

| | **Beispiel 1** | **Vergleichsbeispiel 2** |
|---|---|---|
| | Gew.-% | Gew.-% |
| Abtrag durch Angriff von kalkaggressiver H₂CO₃ über 28 d in Gew.-% | -0,2 | |
| | -0,1 | -14,3 |
| | -0,0 | |

| | Wert | Wert |
|---|---|---|
| Beurteilung [1 - 6] Angriff biogener H₂SO₄ nach 3 Monaten Einlagerung | 1-2 | 4-5 |

Um den Angriff durch kalkaggressive H₂CO₃ zu quantifizieren, wurden 1 x 4 x 16 cm Prismen in einem Becken mit Wasser, welches ca. 230 mg / L kalkaggressives H₂CO₃ enthielt (Bestimmung nach Heyer), eingelagert. Alle 7 Tage wurden die Prismen gebürstet, getrocknet und der Gewichtsverlust bestimmt.

**Tabelle 2: Ergebnisse zu Biegezug- (BZ)/Druckfestigkeit (DR), Schwund, Expansion, Gewichtsverlust 23/50, Gewichtszunahme 23 °C/90 % LF**

| | | **Beispiel 1** |
|---|---|---|
| BZ (in Anlehnung an EN 196 Teil 1) | 28 d/RT [N/mm²] | 6,8 |
| DR (in Anlehnung an EN 196 Teil 1) | 28 d/RT [N/mm²] | 59,0 |
| | | |
| Schwund (nach Graf-Kaufmann) | NK 23/50 28 d [N/mm²] | - 0,76 |
| Expansion (nach Graf-Kaufmann) | 90 % LF 23 °C 28 d [N/mm²] | 0,56 |
| | | |
| Gewichtsverlust | 23/50 NK 28 d [%] | - 3,21 |
| Gewichtszunahme | 23/90 % LF 28 d [%] | 0,48 |

**Tabelle 3: Ergebnisse zu Verarbeitungszeit und Vicat-Erstarrung**

| | **Beispiel 1** |
|---|---|
| Anmachwasser g/kg Pulver | 165 |
| Verarbeitungszeit | 40 min |
| Vicat Erstarrung | 77 - 95 min |

### Vergleichsbeispiel 3: Fugenmörtel

| | |
|---|---|
| 60 Gew.-% | Quarzsand HS4 |
| 20 Gew.-% | Portlandzement CEM1 52,5R |
| 20 Gew.-% | Calciumaluminatzement mit niedrigem Eisengehalt (<0,4 Gew.-%) |
| Anmachwasser: | 190 g/kg Pulver |

Bei Vergleichsbeispiel 3 war ein erhöhter Anmachwasserbedarf von 190 g/kg notwenig und führte unmittelbar zum Erstarren ("False Set/Löffelbinder"). Eine Verarbeitbarkeit war nicht mehr gegeben.

## Patentansprüche

1. Verwendung einer Bindemittelmischung auf Basis von Portlandzementklinkermehl und Calciumaluminatzement zur Formulierung von zementären Mörtelsystemen, **dadurch gekennzeichnet, dass** diese
a) 35 bis 60 Gew.-% Portlandzementklinkermehl ohne Erstarrungsregler in Form von Sulfatträgern,
b) 35 bis 60 Gew.-% Calciumaluminatzement,
c) 5 bis 20 Gew.-% Zusatzstoffe, ausgewählt aus der Gruppe Puzzolane und/oder latenthydraulische Stoffe,
enthält.

2. Verwendung nach Anspruch 1, **dadurch gekennzeichnet, dass** der Calciumaluminatzement aus 30 bis 85 Gew.-% Al₂O₃, 15 bis 50 Gew.-% CaO, 0 bis 20 Gew.-% SiO₂ sowie 0 bis 25 Gew.-% Fe₂O₃+FeO besteht.

3. Verwendung nach Anspruch 1 oder 2, **dadurch gekennzeichnet, dass** der Calciumaluminatzement einen mittleren Durchmesser (d₅₀-Wert) von 0,1 bis 250 µm, insbesondere 0,5 bis 25 µm, besitzt.

4. Verwendung nach einem der Ansprüche 1 bis 3, **dadurch gekennzeichnet, dass** als Puzzolane und/oder latenthydraulische Stoffe Mikrosilica, Nanosilica, Metakaolin, Flugasche, Reisschalenasche, sulfatfreie Schlacken (Hüttensande), amorphes gefälltes Silica, synthetische Calciumsilikathydrate, Trassmehl, Schiefermehl, wässrige kolloide SiO₂-Dispersionen, Zeolithe, Kieselgur, Tonmineralien sowie aktivierte Tonmineralien eingesetzt werden.

5. Verwendung nach einem der Ansprüche 1 bis 4, **dadurch gekennzeichnet, dass** die Bindemittelmischung zur Formulierung von zementären Mörtelsystemen noch 0,1 bis 5 Gew.-% Additive aus der Gruppe der Fließmittel, Beschleuniger, Kunststoffdispersionen, Stärkeether, Celluloseether, Wasserrückhaltemittel, Farbpigmente, Luftporenbildner, Entschäumer, Hydrophobierungsmittel, sulfatfreie Quell- oder Treibmittel (z. B. A1-Pulver) und Stabilisierer enthält.

6. Verwendung nach einem der Ansprüche 1 bis 5, **dadurch gekennzeichnet, dass** die Bindemittelmischung zur Herstellung von hydraulisch abbindenden Mörteln, wie z. B. Fugenmörtel, Fliesenkleber, Reparaturmörtel, Vergussmörtel, Putze, Spachtelmassen und zementäre Abdichtungen, eingesetzt werden.

7. Verwendung nach einem der Ansprüche 1 bis 6, **dadurch gekennzeichnet, dass** die zementären Mörtelsysteme in ein-oder zweikomponentiger Form zum Einsatz kommen.

## Claims

1. Use of a binder mixture based on finely ground Portland cement clinker and calcium aluminate cement for formulating cementitious mortar systems, **characterized in that** said mixture comprises
a) 35% to 60% by weight of finely ground Portland cement clinker without solidification regulators in the form of sulphate carriers,
b) 35% to 60% by weight of calcium aluminate cement,
c) 5% to 20% by weight of adjuvants selected from the group of pozzolanas and/or latent-hydraulic substances.

2. Use according to Claim 1, **characterized in that** the calcium aluminate cement consists of 30% to 85% of Al₂O₃, 15% to 50% by weight of CaO, 0% to 20% by weight of SiO₂ and 0% to 25% by weight of Fe₂O₃+FeO.

3. Use according to Claim 1 or 2, **characterized in that** the calcium aluminate cement possesses an average diameter (d₅₀) of 0.1 to 250 µm, more particularly 0.5 to 25 µm.

4. Use according to any of Claims 1 to 3, **characterized in that** pozzolanas and/or latent-hydraulic substances used are microsilica, nanosilica, metakaolin, fly ash, rice husk ash, sulphate-free slags (foundry sands), amorphous precipitated silica, synthetic calcium silicate hydrates, finely ground trass, finely ground slate, aqueous colloidal SiO₂ dispersions, zeolites, kieselguhr, clay minerals and activated clay minerals.

5. Use according to any of Claims 1 to 4, **characterized in that** the binder mixture for formulating cementitious mortar systems further comprises 0.1% to 5% by weight of additives from the group of plasticizers, accelerants, polymeric dispersions, starch ethers, cellulose ethers, water retainers, colour pigments, air-pore formers, defoamers, hydrophobizing agents, sulphate-free swelling or aerating agents (e.g. Al powders) and stabilizers.

6. Use according to any of Claims 1 to 5, **characterized in that** the binder mixture is used for producing hydraulically setting mortars, such as, for example, jointing mortars, tile adhesives, repair mortars, pouring mortars, renders, knifing fillers and cementitious sealing systems.

7. Use according to any of Claims 1 to 6, **characterized in that** the cementitious mortar systems are employed in one- or two-component form.

## Revendications

1. Utilisation d'un mélange de liants à base de poudre de clinker de ciment Portland et de ciment d'aluminate de calcium, pour la formulation de systèmes de mortiers cimentaires, **caractérisée en ce que** ce mélange contient
a) 35 à 60 % en poids de poudre de clinker de ciment Portland sans régulateurs de prise sous forme de porteurs de sulfate,
b) 35 à 60 % en poids de ciment d'aluminate de calcium,
c) 5 à 20 % en poids d'adjuvants, choisis dans le groupe des pouzzolanes et/ou des matières hydrauliques latentes.

2. Utilisation selon la revendication 1, **caractérisée en ce que** le ciment d'aluminate de calcium est constitué de 30 à 85 % en poids d'Al₂O₃, 15 à 50 % en poids de CaO, 0 à 20 % en poids de SiO₂ ainsi que 0 à 25 % en poids de Fe₂O₃+FeO.

3. Utilisation selon la revendication 1 ou 2, **caractérisée en ce que** le ciment d'aluminate de calcium présente un diamètre moyen (valeur d₅₀) de 0,1 à 250 µm, en particulier de 0,5 à 25 µm.

4. Utilisation selon l'une quelconque des revendications 1 à 3, **caractérisée en ce qu'**en tant que pouzzolanes et/ou matières hydrauliques latentes on utilise de la microsilice, de la nanosilice, du métakaolin, des cendres volantes, des cendres d'écorces de riz, des laitiers sans sulfate (sables de hauts-fourneaux), de la silice précipitée amorphe, des silicates de calcium hydratés synthétiques, de la poudre de trass, de la poudre de schiste, des dispersions aqueuses colloïdales de SiO₂, des zéolithes, du kieselguhr, des minéraux argileux ainsi que des minéraux argileux activés.

5. Utilisation selon l'une quelconque des revendications 1 à 4, **caractérisée en ce que** le mélange de liants pour la formulation de systèmes de mortiers cimentaires contient encore 0,1 à 5 % en poids d'additifs choisis dans le groupe des fluidifiants, accélérateurs, dispersions de matières plastiques, éthers d'amidon, éthers de cellulose, agents de rétention d'eau, pigments colorés, entraîneurs d'air, antimousses, agents d'hydrophobie, agents d'expansion ou de gonflement sans sulfate (poudre d'A1 par exemple) et stabilisants.

6. Utilisation selon l'une quelconque des revendications 1 à 5, **caractérisée en ce que** le mélange de liants est utilisé pour la production de mortiers à prise hydraulique, par exemple des mortiers à joints, colles pour carreaux, mortiers de réparation, mortiers de coulée, enduits, mastics et étanchéifications cimentaires.

7. Utilisation selon l'une quelconque des revendications 1 à 6, **caractérisée en ce que** les systèmes de mortier cimentaires sont utilisés sous une forme mono- ou bicomposant.
